# EUROPEAN PATENT APPLICATION

(11) **EP 4 458 907 A1**
(43) Date of publication of application: **06.11.2024**
(21) Application number: 22915066.9
(22) Date of filing: 29.12.2022
(51) Int. Cl.: C08L 79/08, C08L 61/34

(54) **RESIN COMPOSITION, AND PREPARATION METHOD THEREFOR AND APPLICATION THEREOF**

(30) Priority: 31.12.2021 CN 202111675924
(71) Applicant: Guangdong Hinno-Tech Co., Ltd., Guangzhou, Guangdong 510555 (CN)
(72) Inventor: GUO, Yongjun, Guangzhou, Guangdong 510555 (CN); WEN, Wenyan, Guangzhou, Guangdong 510555 (CN); XIAO, Hao, Guangzhou, Guangdong 510555 (CN)
(74) Representative: Murgitroyd & Company
(86) International application number: PCT/CN2022/143422
(87) International publication number: WO 2023/125817

(57) **Abstract**

The present invention relates to a resin composition, and a preparation method therefor and an application thereof. The resin composition comprises the following raw material components in parts by mass: 10-30 parts of hydrocarbon resin prepolymer 50-100 parts of bismaleimide resin, 30-80 parts of cyanate ester resin, 5-30 parts of functional resin, 10-60 parts of inorganic filler and 10-20 parts of flame retardant; the hydrocarbon resin prepolymer is prepared by means of the prepolymerization of allyl benzoxazine and a hydrocarbon resin. According to the present invention, the hydrocarbon resin prepolymer is prepared by means of allyl benzoxazine and the hydrocarbon resin, and is further reasonably proportioned with the bismaleimide resin and the remaining components, so that the compatibility of the hydrocarbon resin and the bismaleimide resin in the prepared resin composition is improved; the resin composition is used as a circuit board substrate, so that the dielectric loss and the dielectric constant of a material can be effectively reduced, and meanwhile, a relatively high peel strength is also achieved.

## Description

### TECHNICAL FIELD

The present application relates to the field of resin materials, particularly to a resin composition, a preparation method therefor, and application thereof.

### BACKGROUND

With the rapid development of the electronics industry, electronic products are developing in the direction of miniaturization, high functionality, and high security, which require electronic components to have higher signal propagation speed and transmission efficiency. Therefore, higher requirements are put forward on a circuit board substrate. On the one hand, the circuit board substrate is required to have high heat resistance, stripping resistance and excellent mechanical properties, on the other hand, it is also required to have lower water absorption, dielectric constant and dielectric loss value.

The conventional circuit board substrates are usually prepared by diamine-modified or allyl-modified bismaleimide resin. However, this kind of bismaleimide resin has some defects such as high curing temperature, high water absorption, high dielectric constant and high dielectric loss value, which limits their application in the field of 5G communication electronic products. Therefore, how to further reduce the dielectric loss and dielectric constant has become one of the important research directions for a modification of the bismaleimide resin materials

Hydrocarbon resin has excellent dielectric properties and is widely used in the field of 5G communication electronic products. However, due to its flexible and non-polar carbon chain structure, hydrocarbon resin has problems such as insufficient rigidity, low strength, poor heat resistance, low glass transition temperature and low peel strength after curing, limiting its use.

A resin composition is proposed including a hydrocarbon resin, a bismaleimide resin, a polyphenylene ether resin, an initiator, an inorganic filler, a flame retardant and a solvent, having high glass transition temperature and excellent heat resistance. However, since the hydrocarbon resin in the composition has low polarity and poor compatibility with a bismaleimide resin with strong polarity, the peel strength of material is low, and the peel strength and dielectric properties cannot be balanced.

### SUMMARY

Accordingly, the present application provides a resin composition with low dielectric loss and dielectric constant and good peel strength, as well as a preparation method and application thereof.

The specific technical solutions are as follows:
In a first aspect, the present application provides a resin composition, including, in parts by mass, the following raw material components:
10 to 30 parts of hydrocarbon resin prepolymer;
50 to 100 parts of bismaleimide resin;
30 to 80 parts of cyanate ester resin;
5 to 30 parts of functional resin;
10 to 60 parts of inorganic filler; and
10 to 20 parts pf flame retardant;
wherein the hydrocarbon resin prepolymer is prepared by prepolymerizing allyl benzoxazine and hydrocarbon resin.

In an embodiment, the allyl benzoxazine is selected from one or more of the following structures: 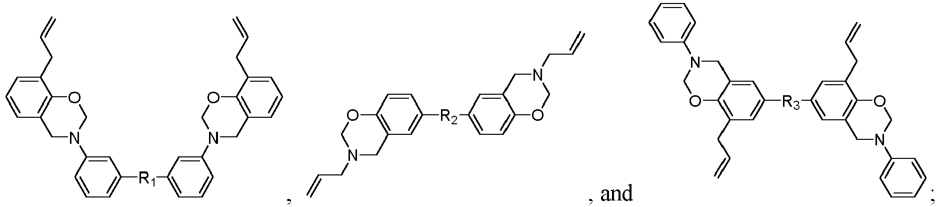 wherein R₁~R₃ are each independently selected from one or more of -CH₂-, -C(CH₃)₂-, -S(=O)₂- and -O-.

In an embodiment, the hydrocarbon resin is selected from one or more of polybutadiene, epoxidized polybutadiene, copolymer of butadiene and styrene, and copolymer of butadiene and acrylic acid.

In an embodiment, a mass ratio of the allyl benzoxazine to the hydrocarbon resin is 100:(10 ~ 50).

In an embodiment, the hydrocarbon resin prepolymer is prepared by the following steps of:
mixing the allyl benzoxazine and the hydrocarbon resin, heating at 100°C to 130°C for 1h to 3h to prepare the hydrocarbon resin prepolymer.

In an embodiment, the bismaleimide resin is selected from organic compounds containing two or more maleimide-based structures in a molecular structure thereof.

In an embodiment, the maleimide-based structure is selected from one or more of N-phenyl maleimido group, N-(2-methylphenyl) maleimido group, N-(4-methylphenyl) maleimido group, N-(2,6-dimethylphenyl) maleimide group, bis(4-maleimidophenyl) methane group, 2,2-bis(4-(4-maleimidophenoxy)-phenyl) propyl group, bis(3,5-dimethyl-4-maleimidophenyl) methyl group, bis(3-ethyl-5-methyl-4-maleimidophenyl) methyl group, bis(3,5-diethyl-4-maleimidophenyl) methyl group, polyphenylmethane bismaleimido group, and biphenyl structure-containing maleimido group.

In an embodiment, the cyanate ester resin is selected from one or more of bisphenol A cyanate ester resin, phenolic cyanate ester resin, bisphenol F cyanate ester resin, multifunctional cyanate ester resin, bisphenol M cyanate ester resin, bisphenol E cyanate ester resin, and dicyclopentadiene bisphenol cyanate ester resin.

In an embodiment, the functional resin is selected from one or more of epoxy resin and polyphenylene ether.

In an embodiment, the inorganic filler is selected from one or more of zirconium vanadate, zirconium tungstate, hafnium tungstate, microcrystalline glass, nepheline, silica, quartz, mica powder, titanium dioxide, magnesium oxide, magnesium hydroxide, talc, aluminum oxide, silicon carbide, boron nitride, aluminum nitride, molybdenum oxide, barium sulfate, zinc molybdate, zinc borate, zinc stannate, zinc oxide, strontium titanate, barium titanate, calcium titanate, clay, and kaolin.

In an embodiment, the flame retardant is selected from halogen-free flame retardants.

In an embodiment, the resin composition, further includes, in parts by mass, 1 to 5 parts of an auxiliary agent.

In an embodiment, the auxiliary agent is selected from one or more of a curing accelerator, a coupling agent, and a toughening agent.

In a second aspect, the present application provides a method for preparing the resin composition, including the following step of:
mixing the raw material components to prepare the resin composition.

In a third aspect, the present application provides a use of the above-mentioned resin composition in preparation of a laminate.

Compared with the prior art, the present application has the following beneficial effects:
In the present application, the hydrocarbon resin prepolymer is prepared by allyl benzoxazine and hydrocarbon resin, and the hydrocarbon resin prepolymer is then mixed with the bismaleimide resin and the remaining components according to a reasonable proportion to prepare the resin composition. The compatibility of the hydrocarbon resin and the bismaleimide resin is improved by the means of the prepolymerization of the allyl benzoxazine, so that the peeling strength and the dielectric property of the material are further improved. When the resin composition is used for manufacturing a circuit board substrate, the dielectric loss and the dielectric constant of a material can be effectively reduced, and meanwhile, a relatively high peel strength is also achieved.

### DETAILED DESCRIPTION OF THE EMBODIMENTS

For the purpose of facilitating an understanding of the present application, the present application will be described more fully hereinafter with reference to embodiments, preferred embodiments of the present application are given below. However, the present application may be embodied in many different forms and is not limited to the embodiments described herein. These embodiments are provided so that the understanding of the application of the present application will be more thorough and complete.

Unless otherwise defined, all technical and scientific terms used herein have the same meaning as commonly understood by skilled person in the art to which the present application belongs. The terms used in the specification of the present application are for the purpose of describing specific embodiments only and are not intended to limit the present application.

As used herein, the optional scope of the terms "and/or", "or/and", "as well as/or" includes any one of two or more of the associated listed items, as well as any and all combinations of the associated listed items, including any two of the associated listed items, any more of the associated listed items, or combinations of all of the associated listed items.

The terms "in a first aspect", "in a second aspect" and "in a second aspect" etc. are used for descriptive purposes only, and cannot be construed as indicating or implying relative importance or quantity, or implicitly specifying the importance or quantity of the indicated technical features. Moreover, the terms "first", "second" and "third", etc. are intended to be non-exhaustive enumerations only, and should not be understood to constitute a closed limitation of quantity.

In open-ended descriptions of technical features, a closed technical solution consisting the listed features is included, as well as an open-ended technical solution including the listed features.

When a numerical interval is mentioned, unless otherwise specified, the above-mentioned numerical interval is considered as being continuous, and includes the minimum and maximum values of the range as well as every value between the minimum and maximum values. Further, when the range refers to integers, every integer between the minimum and maximum values of the range is included. When multiple ranges are provided to describe a feature or characteristic, the ranges can be combined. In other words, unless otherwise indicated, the numerical ranges in the present application should be understood to encompass any and all subranges included therein.

Unless specifically limited, a temperature parameter in the present application allows a constant temperature treatment or a treatment varying within a certain temperature range. The constant temperature treatment allows the temperature to fluctuate within an accuracy range of an instrument control.

The present application provides a resin composition, including, in parts by mass, the following raw material components:
10 to 30 parts of hydrocarbon resin prepolymer;
50 to 100 parts of bismaleimide resin;
30 to 80 parts of cyanate ester resin;
5 to 30 parts of functional resin;
10 to 60 parts of inorganic filler; and
10 to 20 parts of flame retardant;
wherein the hydrocarbon resin prepolymer is prepared by prepolymerizing allyl benzoxazine and hydrocarbon resin.

In the present application, the hydrocarbon resin prepolymer is prepared by allyl benzoxazine and hydrocarbon resin. The compatibility of the hydrocarbon resin and other strong polar resin such as the bismaleimide resin is improved by the means of the prepolymerization. The hydrocarbon resin prepolymer is then mixed with the remaining components according to a reasonable proportion to prepare the resin composition. When the resin composition is used for manufacturing a circuit board substrate, the dielectric loss and the dielectric constant of a material can be effectively reduced, and meanwhile, a relatively high peel strength is also achieved.

In the present application, the hydrocarbon resin has excellent dielectric performance, its flexible chain segment greatly improves the brittleness of the bismaleimide resin. The bismaleimide resin can increase the glass transition temperature and the high temperature modulus of the hydrocarbon resin. The compatibility of the bismaleimide resin and the bismaleimide resin is improved by means of the prepolymerization of the allyl benzoxazine, and the heat resistance and the mechanical performance of the prepared resin composition used as the circuit board substrate are improved.

In an example, the allyl benzoxazine is selected from one or more of the following structures: 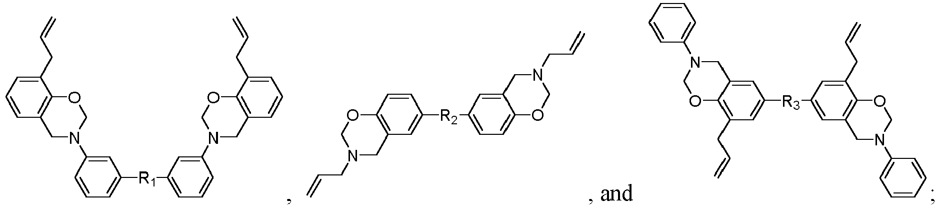 wherein R₁~R₃ are independently selected from one or more of -CH₂-, -C(CH₃)₂-, -S(=O)₂-, and -O-. Further, R₁~R₃ are independently -CH₂-, -C(CH₃)₂-, -S(=O)₂- or -O-.

In an example, the hydrocarbon resin is selected from one or more of polybutadiene, epoxidized polybutadiene, copolymer of butadiene and styrene, and copolymer of butadiene and acrylic acid.

In an example, a mass ratio of allyl benzoxazine to the hydrocarbon resin is 100: (10-50). Further, the mass ratio of the allyl benzoxazine to the hydrocarbon resin includes, but is not limited to, 100:10, 100:15, 100:20, 100:25, 100:30, 100:35, 100:40, 100:45, and 100:50.

In an example, the hydrocarbon resin prepolymer is prepared by the following steps of:
mixing the allyl benzoxazine and the hydrocarbon resin, heating at 100°C to 130°C for 1h to 3h to prepare the hydrocarbon resin prepolymer. Further, after mixing the allyl benzoxazine and the hydrocarbon resin, the heating temperature includes, but is not limited to, 100°C, 105°C, 110°C, 115°C, 120°C, 125°C, and 130°C; and the heating time includes, but is not limited to, 1h, 1.5h, 2h, 2.5h, and 3h.

In the present application, the bismaleimide resin is not particularly limited, and it can be organic compounds containing two or more maleimide-based structures in a molecular structure thereof. Further, the maleimide-based structure is selected from one or more of N-phenyl maleimido group, N-(2-methylphenyl) maleimido group, N-(4-methylphenyl) maleimido group, N-(2,6-dimethylphenyl) maleimide group, bis(4-maleimidophenyl) methane group, 2,2-bis (4-(4-maleimidophenoxy)-phenyl) propyl group, bis(3,5-dimethyl-4-maleimidophenyl) methyl group, bis(3-ethyl-5-methyl-4-maleimidophenyl) methyl group, bis(3,5-diethyl-4-maleimidophenyl) methyl group, polyphenylmethane bismaleimido group, and biphenyl structure-containing maleimido group.

In an example, the cyanate ester resin is selected from one or more of bisphenol A cyanate ester resin, phenolic cyanate ester resin, bisphenol F cyanate ester resin, multifunctional cyanate ester resin, bisphenol M cyanate ester resin, bisphenol E cyanate ester resin, and dicyclopentadiene bisphenol cyanate ester resin.

In an example, the functional resin is selected from one or more of epoxy resin and polyphenylene ether.

In an example, the inorganic filler is selected from one or more of zirconium vanadate, zirconium tungstate, hafnium tungstate, microcrystalline glass, nepheline, silica, quartz, mica powder, titanium dioxide, magnesium oxide, magnesium hydroxide, talc, aluminum oxide, silicon carbide, boron nitride, aluminum nitride, molybdenum oxide, barium sulfate, zinc molybdate, zinc borate, zinc stannate, zinc oxide, strontium titanate, barium titanate, calcium titanate, clay, and kaolin.

In an example, the flame retardant is a halogen-free flame retardant. Further, the flame retardant includes, but are not limited to, a phosphorus-containing flame retardant and a silicon-containing flame retardant. It can be understood that the phosphorus-containing flame retardant may be a phosphorus-containing epoxy resin, a phosphorus-containing phenolic resin, a phosphazene compound, a phosphate compound, etc., and the silicon-containing flame retardant may be a silicone polymer, etc.

In an example, the resin composition further includes, in parts by mass, 1 to 5 parts of an auxiliary agent.

In an example, the auxiliary agent is selected from one or more of a curing accelerator, a coupling agent, and a toughening agent.

It should be understood that the cure accelerator, coupling agent, and toughening agent may be selected from conventional cure accelerators, coupling agents and toughening agents in the art. Further, the curing accelerator may be selected from, but not limited to, an imidazole curing agent, an organic metal salt curing agent, and a peroxide curing agent; and the toughening agent may be selected from, but not limited to, a rubber, a silicone resin, and a phenoxy resin.

The present application provides a method for preparing the resin composition, including the following step of:
mixing the raw material components to prepare the resin composition.

It should be understood that when preparing the resin composition, an organic solvent may be added to facilitate a dissolution and mixing of raw material components during the preparation process. The organic solvent may be selected from a conventional organic solvent in the art. Further, the organic solvent may be one organic solvent or a mixed solvent of two or more organic solvents.

The present application also provides a use of the resin composition in preparation of a laminate.

In the present application, the hydrocarbon resin prepolymer is firstly prepared by allyl benzoxazine and the hydrocarbon resin, and the hydrocarbon resin prepolymer is then mixed with the bismaleimide resin and the remaining components according to a reasonable proportion to prepare the resin composition. The laminate prepared by the resin composition has lower dielectric loss and dielectric constant, and meanwhile, has better peeling strength. In addition, the laminate prepared by the resin composition has better heat resistance and mechanical properties.

The present application will be further described in detail below with reference to specific examples. The raw materials, reagents, etc. used in the following examples are commercially available unless otherwise specified.

The raw materials used in examples and comparative examples in the present application are as follows:
Bismaleimide resin: Honghu Shuangma Factory, BMI-01, has the following structure: 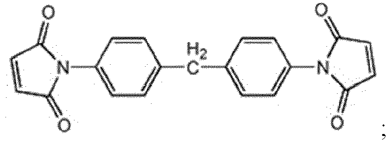
Cyanate ester resin: Lonza, with the product model of BA-3000S;
Phosphor compound: Otsuka Chemical, with the product model of SPB100;
Epoxy resin: Nippon Kayaku, with the product model of XD1000;
polyphenylene ether: Sabic, with the product model of SA9000;
Polybutadiene: OSAKA SODA, with the product model of B-1000;
Curing accelerator: DCP;
Silica: Admatechs, with the product model of SO-C2.

### 1. Preparation of Hydrocarbon Resin Prepolymer 1

100 parts of allyl benzoxazine and 20 parts of polybutadiene were added to a three-necked flask, and an appropriate amount of mixed solvent of toluene and butanone were added, then heated in an oil bath to 120°C, and continuously stirred for 2.5h to prepare hydrocarbon resin prepolymer 1. Allyl benzoxazine is purchased from Chengdu CORYES with CB6900.

### 2. Preparation of Hydrocarbon Resin Prepolymer 2

100 parts of allyl benzoxazine and 70 parts of polybutadiene were added to a three-necked flask, and an appropriate amount of mixed solvent of toluene and butanone were added, then heated in an oil bath to 120°C, and continuously stirred for 2.5h to prepare hydrocarbon resin prepolymer 2. Allyl benzoxazine is purchased from KOLON resin with KZH-5031MP70.

### 3. Preparation of Hydrocarbon Resin Prepolymer 3

100 parts of allyl benzoxazine and 20 parts of copolymer of butadiene and styrene were added to a three-necked flask, and an appropriate amount organic solvent was added, then heated in an oil bath to 120°C, and continuously stirred for 2.5h to prepare hydrocarbon resin prepolymer 3. Allyl benzoxazine is purchased from Chengdu CORYES with a product model of CB6900.

### 4. Preparation of Prepreg

Glue solutions (i.e. resin compositions) of each examples and comparative examples were prepared according to the raw material components and proportions shown in Table 1 below, then immersed with 2116 glass fiber cloth in the glue solutions respectively, and baked in an oven at 160°C × 3 min to obtain prepregs with glue content of 55%.

**Table 1**

| Component | | Examples | | | | Comparative examples | | | |
|---|---|---|---|---|---|---|---|---|---|
| | | 1 | 2 | 3 | 4 | 1 | 2 | 3 | 4 |
| Hydrocarbon resin prepolymer | 1 | 10 | 20 | 30 | | - | 50 | - | - |
| | 2 | - | - | - | - | 20 | - | - | - |
| | 3 | - | - | - | 10 | | - | - | - |
| Polybutadiene | | - | - | - | - | - | - | - | 10 |
| Bismaleimide resin | | 50 | 75 | 100 | 50 | 75 | 75 | 50 | 50 |
| Cyanate ester resin | | 30 | 55 | 80 | 30 | 55 | 55 | 30 | 30 |
| Polyphenylene ether | | 5 | 5 | 5 | 5 | 5 | 5 | - | - |
| Phosphorus compounds | | 10 | 15 | 20 | 10 | 15 | 15 | 10 | 10 |
| Epoxy resin | | - | - | - | - | - | - | 5 | 5 |
| Silicon dioxide | | 30 | 30 | 30 | 30 | 30 | 30 | 30 | 30 |
| Curing accelerator | | 2 | 2 | 2 | 2 | 2 | 2 | 2 | 2 |

### 5. Fabrication of Laminate

10 sheets of prepreg prepared in each examples and comparative examples were laminated to obtain laminates corresponding to each examples and comparative examples, and an electrolytic copper foil with a thickness of 18µm was covered on each of the upper and lower sides of the laminated body, then the laminated body was placed in a vacuum press with programmable temperature and pressure controls, and were hot pressed and cured under a pressure of 30kgf/cm² according to a procedure of 180°C×1h+220°C × 2h + 240°C × 2h to obtain a copper clad laminate with a thickness of 1.0mm.

### 6. Performance Test:

Performance tests were performed on the copper clad laminates produced in Examples 1-4 and Comparative Examples 1-4:

**Table 2**

| Test items | Examples: | | | | Comparative Example | | | |
|---|---|---|---|---|---|---|---|---|
| | 1 | 2 | 3 | 4 | 1 | 2 | 3 | 4 |
| Compatibility | ★★★★★ | ★★★★★ | ★★★★★ | ★★★★★ | ★★★★ | ★★★★ | ★★★★★ | ★ |
| Tg/°C | 261 | 260 | 255 | 265 | 245 | 248 | 260 | 238 |
| Peel strength /lb/in | 6.5 | 6.3 | 5.9 | 6.4 | 5.5 | 5.5 | 7.0 | 4.0 |
| Heat resistance to tin immersion /s | >300 | >300 | >300 | >300 | >300 | >300 | >300 | >300 |
| PCT (121 °C×4 h)/s | Pass | Pass | Pass | Pass | Pass | Pass | Pass | NG |
| Flexural modulus at 25 °C/Gpa | 31/29 | 30/29 | 30/28 | 31/29 | 29/27 | 27/26 | 32/30 | 25/23 |
| Flame retardant rating | UL94V0 | UL94V0 | UL94V0 | UL94 V0 | UL94V0 | UL94V0 | UL94V0 | UL94V0 |
| Falling weight impact test: | ☆☆☆☆☆ | ☆☆☆☆☆ | ☆☆☆☆☆ | ☆☆☆☆☆ | ☆☆☆☆ | ☆☆☆☆ | ☆ | ☆☆ |
| Dielectric constant | 3.64 | 3.75 | 3.55 | 3.62 | 3.65 | 3.60 | 4.01 | 3.92 |
| Dielectric loss tangent | 0.005 | 0.006 | 0.004 | 0.005 | 0.004 | 0.005 | 0.010 | 0.008 |

| | | | | | | | | |
|---|---|---|---|---|---|---|---|---|
| More * indicate better compatibility; more ☆ indicate better impact resistance; | | | | | | | | |

The test method is as follows:
(1) The compatibility: visual inspection, placing the resin in a normal temperature environment, and standing to observe whether a substance precipitate;
(2) The glass transition temperature (TG)/storage modulus was determined according to IPC-TM650 2.4.25D
(3) The peel strength: the test method was conducted according to IPC-TM-650 2.4.8.
(4) The heat resistance to tin immersion was determined according to IPC-TM650 2.4.6;
(5) The PCT was determined according to IPC-TM650 2.6.23;
(6) The flexural modulus was determined according to IPC-TM650 2.4.4;
(7) The flame retardant rating was determined according to IPC-TM650 2.3.10;
(8) The falling weight impact test was determined with a falling weight impact meter;
(9) The dielectric property test was determined according to IPC-TM650 2.5.5.2.

Each of the technical features of the above-mentioned embodiments may be combined arbitrarily. To simplify the description, not all the possible combinations of each of the technical features in the above embodiments are described. However, all of the combinations of these technical features should be considered as within the scope of this application, as long as such combinations do not contradict with each other.

The above-mentioned embodiments are merely illustrative of several embodiments of the present application, which are described specifically and in detail, but it cannot be understood to limit the scope of the present application. It should be noted that, for those ordinary skilled in the art, several variations and improvements may be made without departing from the concept of the present application, and all of which are within the protection scope of the present application. Therefore, the protection scope of the present application shall be defined by the appended claims.

## Claims

1. A resin composition, comprising, in parts by mass, the following raw material components:
10 to 30 parts of hydrocarbon resin prepolymer;
50 to 100 parts of bismaleimide resin;
30 to 80 parts of cyanate ester resin;
5 to 30 parts of functional resin;
10 to 60 parts of inorganic filler; and
10 to 20 parts of flame retardant;
wherein the hydrocarbon resin prepolymer is prepared by prepolymerizing allyl benzoxazine and hydrocarbon resin.

2. The resin composition according to claim 1, wherein the allyl benzoxazine is selected from one or more of the following structures: 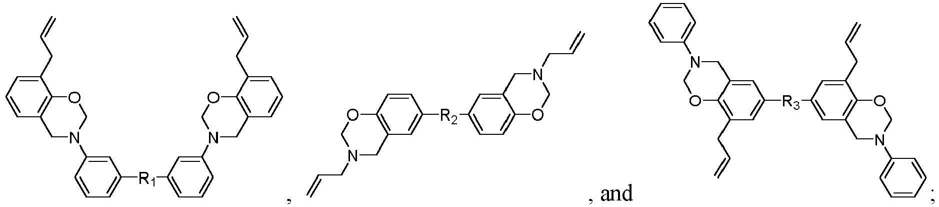 wherein R₁~R₃ are each independently selected from one or more of -CH₂-, -C(CH₃)₂-, -S(=O)₂- and -O-.

3. The resin composition according to claim 1, wherein the hydrocarbon resin is selected from one or more of polybutadiene, epoxidized polybutadiene, copolymer of butadiene and styrene, and copolymer of butadiene and acrylic acid.

4. The resin composition according to claim 1, wherein a mass ratio of the allyl benzoxazine to the hydrocarbon resin is 100:(10 ~ 50).

5. The resin composition according to claim 1, wherein the hydrocarbon resin prepolymer is prepared by the following steps of:
mixing the allyl benzoxazine and the hydrocarbon resin, heating at 100°C to 130°C for 1h to 3h to prepare the hydrocarbon resin prepolymer.

6. The resin composition according to claim 1, wherein the bismaleimide resin is selected from organic compounds containing two or more maleimide-based structures in a molecular structure thereof.

7. The resin composition according to claim 6, wherein the maleimide-based structure is selected from one or more of N-phenyl maleimido group, N-(2-methylphenyl) maleimido group, N-(4-methylphenyl) maleimido group, N-(2,6-dimethylphenyl) maleimide group, bis(4-maleimidophenyl) methane group, 2,2-bis (4-(4-maleimidophenoxy)-phenyl) propyl group, bis (3,5-dimethyl-4-maleimidophenyl) methyl group, bis(3-ethyl-5-methyl-4-maleimidophenyl) methyl group, bis(3,5-diethyl-4-maleimidophenyl) methyl group, polyphenylmethane bismaleimido group, and biphenyl structure-containing maleimido group.

8. The resin composition according to any one of claims 1 to 7, wherein the cyanate ester resin is selected from one or more of bisphenol A cyanate ester resin, phenolic cyanate ester resin, bisphenol F cyanate ester resin, multifunctional cyanate ester resin, bisphenol M cyanate ester resin, bisphenol E cyanate ester resin, and dicyclopentadiene bisphenol cyanate ester resin.

9. The resin composition according to any one of claims 1 to 7, wherein the functional resin is selected from one or more of epoxy resin and polyphenylene ether.

10. The resin composition according to any one of claims 1 to 7, wherein the inorganic filler is selected from one or more of zirconium vanadate, zirconium tungstate, hafnium tungstate, microcrystalline glass, nepheline, silica, quartz, mica powder, titanium dioxide, magnesium oxide, magnesium hydroxide, talc, aluminum oxide, silicon carbide, boron nitride, aluminum nitride, molybdenum oxide, barium sulfate, zinc molybdate, zinc borate, zinc stannate, zinc oxide, strontium titanate, barium titanate, calcium titanate, clay, and kaolin.

11. The resin composition according to any one of claims 1 to 7, wherein the flame retardant is selected from halogen-free flame retardants.

12. The resin composition according to any one of claims 1 to 7, further comprising, in parts by mass, 1 to 5 parts of an auxiliary agent.

13. The resin composition according to claim 12, wherein the auxiliary agent is selected from one or more of a curing accelerator, a coupling agent, and a toughening agent.

14. A method for preparing the resin composition according to any one of claims 1 to 13, comprising the following step of:
mixing the raw material components to prepare the resin composition.

15. A use of the resin composition according to any one of claims 1 to 13 in preparation of a laminate.
